# FASCICULE DE BREVET EUROPEEN

(11) **EP 1 986 361 B1**
(45) Date de publication et mention de la délivrance du brevet: **02.06.2010**
(21) Numéro de dépôt: 08103607.1
(22) Date de dépôt: 18.04.2008
(51) Int. Cl.: H04J 14/02, H04B 10/18

(54) **Dispositif de commutation optique pour réseau optique transparent**
Optische Schaltvorrichtung für transparentes optisches Netz
Optical switching device for a transparent optical network

(30) Priorité: 27.04.2007 FR 0754731
(43) Date de publication de la demande: 29.10.2008
(73) Titulaire: Alcatel Lucent, 75008 Paris (FR)
(72) Inventeur: Zami, Thierry, 91300 Massy (FR); Leplingarg, Florence, 78350 Jouy-en-Josas (FR)
(74) Mandataire: Thibaud, Jean-Baptiste

(56) Documents cités:
- EP-A- 1 643 668
- US-B1- 6 381 048
- MECHELS S ET AL: "1D MEMS-BASED WAVELENGTH SWITCHING SUBSYSTEM" IEEE COMMUNICATIONS MAGAZINE, IEEE SERVICE CENTER,NEW YORK, NY, US, vol. 41, no. 3, mars 2003 (2003-03), pages 88-94, XP001144077 ISSN: 0163-6804

## Description

L'invention se rapporte au domaine des réseaux optiques WDM transparents, notamment à des dispositifs de commutation pour réseau optique transparent qui sont capables de commuter des canaux de longueur d'onde sans les convertir dans le domaine électronique.

La maîtrise de la technologie de la transmission par fibre optique à multiplexage de longueurs d'ondes optiques ou WDM est un facteur important pour répondre aux besoins croissants de débits dans la transmission d'informations. Le multiplexage de longueurs d'ondes consiste à combiner sur une même fibre optique plusieurs canaux modulés ayant chacun une longueur d'onde porteuse différente. Ainsi, le débit global d'une ligne de transmission est égal à la somme des débits des différents canaux.

On applique le qualificatif « transparent » à un système de transmission dans lequel le signal reste dans le domaine optique sans conversion dans le domaine électronique. La transparence dans les réseaux de communication optique est une caractéristique qui permet de réduire le coût des équipements de réseau en supprimant des conversions optique-électrique-optique, et donc des transducteurs correspondants. Des sous-systèmes utilisés dans les réseaux WDM transparents sont notamment les multiplexeurs optiques reconfigurables à insertion-extraction ou ROADM et les brasseurs optiques transparents ou OXC. Pour réaliser de tels sous-systèmes, les équipements connus sous le nom de commutateur à sélection de longueurs d'ondes ou WSS (Wavelength Selective Switch) présentent un intérêt considérable. En effet, ces équipements permettent de réaliser des noeuds de commutation de degré quelconque ayant une grande flexibilité de configuration avec une structure nettement plus simple qu'en utilisant des composants discrets, un encombrement moindre et une fiabilité élevée. Des commutateurs à sélection de longueurs d'ondes et leurs applications sont décrits, entre autres, dans US-A-2002/196520, WO-A-2004/015469 et S. MECHELS et al., IEEE Communication Magazine, mars 2003, pp 88-94.

Toutefois, la transparence dans les réseaux de communication optique, et notamment dans les noeuds de commutation, est d'autant plus intéressante que la distance sur laquelle on est capable de transporter le signal optique sans perte de qualité est grande. Or, le WDM est soumis à des limitations de la propagation. Ces limitations sont dues à des effets linéaires, comme la dispersion chromatique, et à des effets non linéaires, comme l'automodulation de phase ou la modulation de phase croisée (XPM pour " cross phase modulation " en anglais.) La XPM est un effet multicanal dans lequel la modulation de phase d'un canal est induite par l'intensité du signal du ou des canaux voisins. Ce phénomène conduit donc à des distorsions de l'intensité du signal à transmettre et limite ainsi la puissance maximale qui peut être introduite dans une fibre optique de transmission, ce qui limite également la distance de transmission pouvant être prévue entre les répéteurs dans le réseau. Plusieurs facteurs sont susceptibles d'influencer la XPM dans un sens défavorable : une forte puissance du signal optique, un faible espacement fréquentiel entre les canaux, et une faible dispersion chromatique dans la fibre optique.

Un autre facteur d'accroissement de la XPM résulte des mécanismes de compensation de la dispersion chromatique mis en oeuvre dans le réseau. En effet, à la fin de la transmission, il est nécessaire que la dispersion chromatique résiduelle du signal optique soit comprise dans une plage de tolérance du récepteur optoélectronique pour que la détection présente une qualité correcte. L'amplitude de cette plage est d'autant plus petite que la cadence de modulation du signal est élevée. Pour respecter cette contrainte, il peut être nécessaire de synchroniser ou resynchroniser les canaux de longueurs d'ondes en certains points du réseau, ce qui entraîne une dégradation du signal par la XPM. Un compromis doit donc être trouvé entre la réduction de la dispersion chromatique et la réduction de la XPM dans une ligne de transmission optique.

Pour celà, EP-1 643 668-A1 propose de placer un ou plusieurs modules de compensation de dispersion chromatique dans un dispositif optique multiplexeur par insertion et extraction.

Pour cela, EP-1014607-A1 propose de placer dans chaque répéteur d'une ligne de transmission une portion de fibre compensatrice de dispersion suivie d'une unité de réduction de la XPM. Cette unité permet d'introduire un décalage temporel entre les canaux de longueurs d'ondes. Bien que cette solution offre de bons résultats, elle présente un coût et un encombrement relativement élevés. De plus, elle suppose l'existence de répéteurs dans la ligne de transmission.

Un but de l'invention est de fournir une solution pour réduire la XPM dans un réseau optique transparent en limitant les coûts d'équipement, l'encombrement et/ou la complexité du déploiement. Un autre but de l'invention est de fournir une solution pour réduire la XPM dans une ligne de transmission dépourvue de répéteurs, par exemple dans un réseau à moyenne portée de type métropolitain.

Pour cela, selon un premier aspect, l'invention fournit un dispositif de commutation optique pour un réseau optique transparent, ledit dispositif comportant :
une entrée pour recevoir un signal optique entrant à multiplexage de longueurs d'ondes,
une sortie pour transmettre un signal optique sortant à multiplexage de longueurs d'ondes,
un module de sélection de longueurs d'ondes reconfigurable agencé pour sélectionner en fonction d'un signal de commande des canaux de longueurs d'ondes dudit signal optique entrant à transmettre vers ladite sortie,
et un coupleur optique comprenant une pluralité de branches de sortie, une première desdites branches de sortie étant connectée à une entrée dudit module de sélection de longueurs d'ondes reconfigurable, caractérisé par le fait qu'il comporte :
   un démultiplexeur de longueurs d'ondes agencé pour faire passer séparément depuis ladite entrée du dispositif de commutation un premier canal de longueur d'onde dudit signal optique entrant vers une première sortie du démultiplexeur de longueurs d'ondes et un deuxième canal de longueur d'onde dudit signal optique entrant vers une deuxième sortie du démultiplexeur de longueurs d'ondes,
   ledit coupleur optique comprenant une pluralité de branches d'entrée, une première desdites branches d'entrée étant connectée à ladite première sortie du démultiplexeur de longueurs d'ondes pour recevoir ledit premier canal de longueur d'onde à travers un premier lien optique présentant un premier retard, une deuxième desdites branches d'entrée étant connectée à ladite deuxième sortie du démultiplexeur de longueurs d'ondes pour recevoir ledit deuxième canal de longueur d'onde à travers un deuxième lien optique présentant un deuxième retard différent du premier retard.

Selon d'autres modes de réalisation avantageux, ce dispositif de commutation peut présenter une ou plusieurs des caractéristiques suivantes :
- le nombre de branches d'entrée du coupleur est inférieur ou égal au nombre de branches de sortie du coupleur.
- le démultiplexeur est apte à séparer des canaux de longueurs d'ondes appartenant à une grille prédéterminée de fréquences porteuses en une pluralité de groupes de canaux qui sont passés vers des sorties respectives, de manière que deux canaux ayant des fréquences adjacentes dans ladite grille sont à chaque fois passés vers deux sorties distinctes du démultiplexeur.
- une deuxième branche de sortie du coupleur est reliée à une entrée d'un deuxième module de sélection de longueurs d'ondes reconfigurable agencé pour transmettre vers une deuxième sortie du dispositif de commutation des canaux de longueurs d'ondes dudit signal optique entrant sélectionnés en fonction d'un signal de commande dudit deuxième module de sélection de longueurs d'ondes, par exemple pour réaliser une architecture de brasseur optique.
- il peut alors comporter une deuxième entrée pour recevoir un deuxième signal optique entrant à multiplexage de longueurs d'ondes, un deuxième coupleur optique comprenant une pluralité de branches d'entrée et une pluralité de branches de sortie, et un deuxième démultiplexeur de longueurs d'ondes agencé pour faire passer séparément depuis ladite deuxième entrée du dispositif de commutation un premier canal de longueur d'onde dudit deuxième signal optique entrant vers une première sortie du deuxième démultiplexeur de longueurs d'ondes et un deuxième canal de longueur d'onde dudit deuxième signal optique entrant vers une deuxième sortie du deuxième démultiplexeur de longueurs d'ondes, les premier et deuxième modules de sélection de longueurs d'ondes reconfigurables comportant chacun une deuxième entrée, une première des branches de sortie du deuxième coupleur étant connectée à la deuxième entrée du premier module de sélection de longueurs d'ondes reconfigurable, une deuxième des branches de sortie du deuxième coupleur étant connectée à la deuxième entrée du deuxième module de sélection de longueurs d'ondes reconfigurable, une première des branches d'entrée du deuxième coupleur étant connectée à ladite première sortie du deuxième démultiplexeur de longueurs d'ondes pour recevoir ledit premier canal de longueur d'onde à travers un troisième lien optique présentant un troisième retard, une deuxième desdites branches d'entrée étant connectée à ladite deuxième sortie du démultiplexeur de longueurs d'ondes pour recevoir ledit deuxième canal de longueur d'onde à travers un quatrième lien optique présentant un quatrième retard différent du troisième retard.
- un module d'extraction relié à une autre branche de sortie du coupleur pour démoduler des données numériques portées par au moins un canal de longueur d'onde du signal optique entrant.
- un module d'insertion relié à une entrée du module de sélection de longueurs d'ondes reconfigurable pour insérer un signal optique modulé à partir de données numériques.

L'invention fournit également un dispositif de commutation optique pour un réseau optique transparent, ledit dispositif comportant :
une entrée pour recevoir un signal optique entrant à multiplexage de longueurs d'ondes,
une sortie pour transmettre un signal optique sortant à multiplexage de longueurs d'ondes,
un module de sélection de longueurs d'ondes reconfigurable agencé pour sélectionner en fonction d'un signal de commande des canaux de longueurs d'ondes dudit signal optique entrant à transmettre vers ladite sortie,
et un coupleur optique comprenant une pluralité de branches d'entrée, une première desdites branches d'entrée étant connectée à une sortie dudit module de sélection de longueurs d'ondes reconfigurable, caractérisé par le fait qu'il comporte :
   un multiplexeur de longueurs d'ondes agencé pour faire passer vers ladite sortie du dispositif de commutation un premier canal de longueur d'onde sélectivement depuis une première entrée dudit multiplexeur de longueurs d'ondes et un deuxième canal de longueur d'onde sélectivement depuis une deuxième entrée dudit multiplexeur de longueurs d'ondes,
   ledit coupleur optique comprenant une pluralité de branches de sortie, une première desdites branches de sortie étant connectée à ladite première entrée du multiplexeur de longueurs d'ondes à travers un premier lien optique présentant un premier retard, une deuxième desdites branches de sortie étant connectée à ladite deuxième entrée du multiplexeur de longueurs d'ondes à travers un deuxième lien optique présentant un deuxième retard différent du premier retard.

Selon d'autres modes de réalisation avantageux, ce dispositif de commutation peut présenter une ou plusieurs des caractéristiques suivantes :
- le nombre de branches de sortie du coupleur est inférieur ou égal au nombre de branches d'entrée du coupleur.
- le multiplexeur est apte à faire passer des canaux de longueurs d'ondes appartenant à une grille prédéterminée de fréquences porteuses sous la forme d'une pluralité de groupes de canaux qui sont passés sélectivement depuis des entrées respectives, de manière que deux canaux ayant des fréquences adjacentes dans ladite grille sont à chaque fois passés depuis deux entrées distinctes du multiplexeur.
- un deuxième module de sélection de longueurs d'ondes reconfigurable agencé pour transmettre depuis une deuxième entrée du dispositif de commutation vers une deuxième branche d'entrée du coupleur des canaux de longueurs d'ondes d'un deuxième signal optique entrant sélectionnés en fonction d'un signal de commande dudit deuxième module de sélection de longueurs d'ondes, par exemple pour réaliser une architecture de brasseur optique transparent.
- il peut alors aussi comporter une deuxième sortie pour transmettre un deuxième signal optique sortant à multiplexage de longueurs d'ondes, un deuxième coupleur optique comprenant une pluralité de branches d'entrée et une pluralité de branches de sortie, et un deuxième multiplexeur de longueurs d'ondes agencé pour faire passer vers ladite deuxième sortie du dispositif de commutation un premier canal de longueur d'onde sélectivement depuis une première entrée dudit deuxième multiplexeur de longueurs d'ondes et un deuxième canal de longueur d'onde sélectivement depuis une deuxième entrée dudit deuxième multiplexeur de longueurs d'ondes, les premier et deuxième modules de sélection de longueurs d'ondes reconfigurables comportant chacun une deuxième sortie, une première des branches d'entrée du deuxième coupleur étant connectée à la deuxième sortie du premier module de sélection de longueurs d'ondes reconfigurable, une deuxième des branches d'entrée du deuxième coupleur étant connectée à la deuxième sortie du deuxième module de sélection de longueurs d'ondes reconfigurable, une première des branches de sortie du deuxième coupleur étant connectée à ladite première entrée du deuxième multiplexeur de longueurs d'ondes à travers un troisième lien optique présentant un troisième retard, une deuxième des branches de sortie du deuxième coupleur étant connectée à ladite deuxième entrée du deuxième multiplexeur de longueurs d'ondes à travers un quatrième lien optique présentant un quatrième retard différent du troisième retard.
- un module d'extraction relié à une autre sortie du module de sélection de longueurs d'ondes reconfigurable pour démoduler des données numériques portées par au moins un canal de longueur d'onde du signal optique entrant.
- un module d'insertion relié à une deuxième branche d'entrée du coupleur pour insérer un signal optique modulé à partir de données numériques.

De préférence, la différence entre le premier retard et le deuxième retard est comprise entre T/10 et 1.5T, où désigne le temps bit du signal optique entrant.

Par ailleurs, les premier, deuxième, troisième et quatrième retards ne sont pas nécessairement tous différents deux à deux.

Une idée à la base de l'invention est d'intégrer une fonction de réduction de la distorsion des signaux, notamment la distorsion induite par XPM, dans un dispositif de commutation optique pour réseau transparent.

Une autre idée à la base de l'invention est d'utiliser un coupleur à plusieurs entrées et plusieurs sorties, par exemple un coupleur en étoile, pour réaliser plusieurs fonctions de manière intégrée. Selon un premier aspect de l'invention, ces fonctions comprennent (i) la recombinaison de canaux de longueurs d'ondes qui proviennent de deux voies permettant d'appliquer un traitement de décorrélation à ces canaux et (ii) la diffusion de ces canaux de longueurs d'ondes traités vers plusieurs sorties optiques et/ou électroniques, par exemple vers des fibres optiques aval et/ou vers un module d'extraction pour le trafic local. Selon un deuxième aspect de l'invention, ces fonctions comprennent (i) la combinaison de canaux de longueurs d'ondes provenant de plusieurs entrées optiques et/ou électroniques, par exemple de fibres optiques amont et/ou d'un module d'insertion pour le trafic local, et (ii) la diffusion de ces canaux de longueurs d'ondes sur deux voies permettant d'appliquer un traitement de décorrélation à ces canaux.

Parmi les nombreuses possibilités envisageables, un coupleur à plusieurs entrées et plusieurs sorties s'est avéré un moyen économique, simple et efficace d'intégrer une fonction de réduction de la distorsion des signaux dans un dispositif de commutation optique pour réseau transparent. En effet, les pertes en dB d'un coupleur N:M, où N désigne le nombre des branches d'entrée et M le nombre des branches de sortie, sont sensiblement proportionnelles à Log₂(Max(N, M)), où Max désigne le plus grand des deux nombres. Ainsi, il s'est avéré que l'utilisation d'un coupleur N:M pour réaliser cette intégration, par exemple avec N=2, ne provoque pas d'accroissement sensible des pertes d'insertion par rapport au coupleur 1:M utilisé dans une architecture antérieure. Ceci reste vrai tant que N≤M. Au contraire, comme cette intégration est susceptible de supprimer le besoin d'utiliser une unité séparée pour la réduction de la distorsion, c'est-à-dire par exemple une unité intégrée au répéteur selon EP-1014607-A1, les pertes d'insertion liées à une telle unité séparées peuvent également être supprimées. Ainsi, une réduction globale des pertes est réalisable grâce à l'invention dans un réseau transparent, en particulier avec des noeuds de commutation ayant une connectivité élevée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

La figure 1 est une représentation schématique fonctionnelle d'un ROADM selon un premier mode de réalisation de l'invention.

La figure 2 est une représentation schématique fonctionnelle d'un ROADM selon un second mode de réalisation de l'invention.

La figure 3 est une représentation schématique fonctionnelle d'un OXC selon un troisième mode de réalisation de l'invention.

La figure 4 est une représentation schématique fonctionnelle d'un OXC selon un quatrième mode de réalisation de l'invention.

La figure 5 est une représentation schématique fonctionnelle d'un OXC selon un mode de réalisation utile à la compréhension de l'invention.

Dans les noeuds de commutation décrits ci-dessous, des commutateurs à sélection de longueurs d'ondes (WSS) servent en tant que modules de sélection de longueurs d'ondes reconfigurables. Comme dans le système antérieur décrit dans EP1014607, la réduction de XPM est obtenue en introduisant des décalages temporels entre les canaux de longueurs d'ondes voisins. Cette fonction de décorrélation temporelle des canaux peut être réalisée en amont ou en aval des commutateurs à sélection de longueurs d'onde.

On rappelle qu'un commutateur à sélection de longueurs d'onde est un équipement comportant une pluralité de ports sélectionnables et au moins un port commun et pouvant remplir une fonction de multiplexage programmable ou de démultiplexage programmable. Lorsqu'il agit en tant que démultiplexeur, les ports sélectionnables servent de sorties et le port commun sert d'entrée commune. Le commutateur à sélection de longueurs d'onde est capable d'aiguiller chaque canal spectral reçu sur son entrée commune, de façon sélective en fonction d'un signal de commande, vers l'une de ses sorties. Cet équipement réalise ainsi une fonction de démultiplexage programmable sur des signaux optiques, encore appelés canaux spectraux, portés par des longueurs d'onde optiques différentes et dont les fréquences optiques sont alignées sur une grille prédéterminée, permettant ainsi que chaque canal présent à l'entrée commune soit dirigé vers l'un des ports de sortie en fonction de sa longueur d'onde et d'une commande. Chaque port de sortie peut donc recevoir sélectivement un canal présent à l'entrée commune, plusieurs canaux présent à l'entrée commune ou aucun canal. La fonction de suppression ou de blocage d'un canal peut être intégrée par construction dans un commutateur à sélection de longueurs d'onde. Dans ce cas, le canal est orienté vers un endroit spécifique du commutateur à sélection de longueurs d'onde où il est absorbé. Certains modèles de WSS sont aussi capables de transmettre simultanément un même canal vers plusieurs ports (multicast).

Ce même équipement peut aussi réaliser la fonction inverse, i.e. le multiplexage programmable, en échangeant les rôles des sorties et de l'entrée. Dans ce cas, les ports sélectionnables servent d'entrées et le port commun sert de sortie commune. Le commutateur à sélection de longueurs d'onde est capable d'aiguiller des canaux spectraux (c'est-à-dire des signaux optiques portés par des longueurs d'onde respectives) reçus sur les entrées, sélectivement en fonction des longueurs d'onde des canaux reçus et des entrées respectives et en fonction d'un signal de commande, vers la sortie commune de cet équipement. Il convient bien entendu que les canaux spectraux aiguillés vers la sortie commune aient des longueurs d'onde différentes. L'équipement réalise alors une fonction de multiplexage programmable permettant de fournir en sortie un canal sélectionné parmi les canaux reçus sur les entrées ou un multiplex de sortie constitué d'un ensemble de canaux sélectionnés parmi les canaux reçus. Sur chaque port d'entrée, on peut envoyer un canal, plusieurs canaux ou aucun canal. Dans le cas où une fonction de blocage est prévue, un canal présent sur un port d'entrée et devant être bloqué est orienté vers un endroit spécifique du commutateur à sélection de longueurs d'onde où il est absorbé.

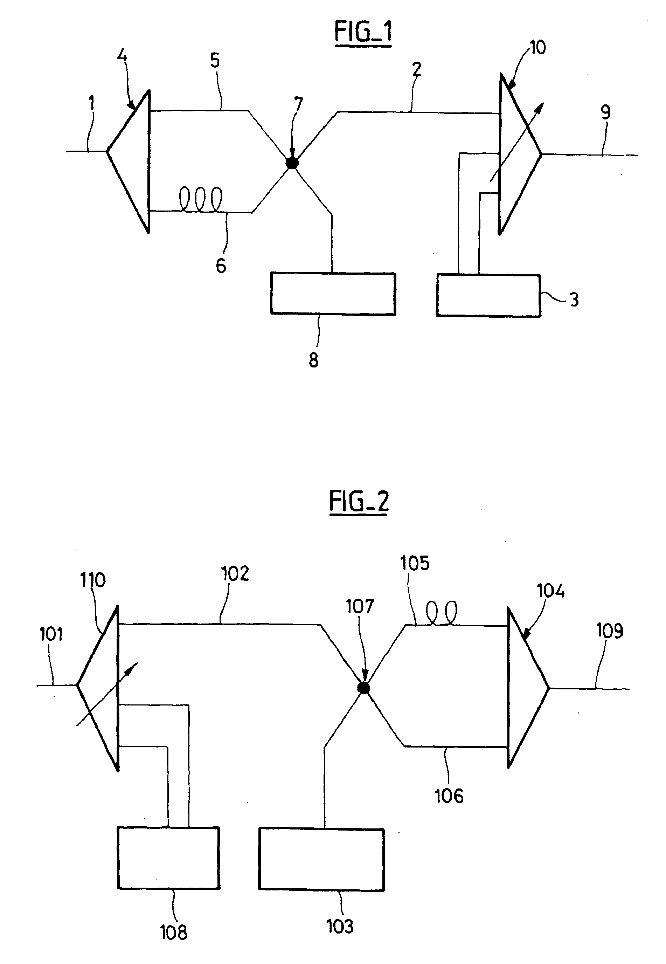

La figure 1 représente un ROADM ayant une architecture de type « broadcast and select » avec un WSS 10 monté comme multiplexeur programmable. En usage, un tel ROADM est monté sur une ligne de transmission optique entre une section de fibre optique amont et une section de fibre optique aval, de la manière habituelle. Une ligne d'entrée 1 permet de recevoir un signal optique d'entrée comprenant un multiplex de canaux de longueurs d'ondes. Une ligne de sortie 9 permet de transmettre un signal optique de sortie comprenant un multiplex de canaux de longueurs d'ondes sélectionnés par le WSS 10. Un entrée du WSS est reliée à un lien optique 2 pour recevoir le signal d'entrée après qu'il a subi un traitement de décorrélation qui sera expliqué plus bas. Une ou plusieurs autres entrées du WSS sont reliées à un module d'insertion 3 pour recevoir un ou plusieurs canaux de longueurs d'ondes devant être insérés dans la ligne de transmission au niveau du ROADM.

Le module d'insertion 3 comprend un ou plusieurs transmetteurs optiques, fixes ou accordables en longueur d'onde, pour générer les signaux optiques à insérer. Il peut aussi comporter divers composants optiques pour combiner, aiguiller ou conditionner les signaux optiques à insérer, tels que multiplexeurs, combineurs, portes optiques, amplificateurs, WSS, etc.

Un démultiplexeur 4 sépare les canaux de rang pair et les canaux de rang impair du signal d'entrée reçu sur la ligne 1 et transmet les premiers sur une ligne optique 5 et les seconds sur une ligne optique 6. Les lignes 5 et 6 transportent les canaux jusqu'à deux branches d'entrée d'un coupleur 7 avec des délais de propagation différents, pour introduire un décalage temporel entre les canaux de rang pair et les canaux de rang impair du signal d'entrée. Le décalage temporel peut être choisi entre T/10 et 1,5T de préférence , où T représente le temps bit. Par exemple, un décalage d'environ 60 à 70 ps peut convenir pour un taux de modulation de 10 Gb/s. Pour un tel délai, la différence de longueur de fibre optique entre les deux lignes n'excède pas quelques centimètres et n'introduit aucune perte sensible par rapport aux pertes globales du noeud. Ainsi, cette différence n'introduit pas de substantiel déséquilibre entre les canaux en termes d'atténuation.

Le coupleur 7 est un coupleur de type 2:2 qui remplit deux fonctions : il recombine les canaux provenant du démultiplexeur 4 à travers les deux lignes 5 et 6, et il diffuse tous ces canaux par ses deux branches de sortie vers la ligne 2 d'une part, et vers un module d'extraction 8 d'autre part.

Le module d'extraction 8 comprend un ou plusieurs récepteurs optiques pour démoduler les données des signaux optiques à extraire. Il peut aussi comporter divers composants optiques pour sélectionner les canaux à extraire, tels que démultiplexeurs, coupleurs, filtres fixes ou accordables, portes optiques, WSS, etc.

La figure 2 représente un ROADM ayant une architecture de type « preselect and combine » avec un WSS 110 monté comme démultiplexeur programmable. Les éléments analogues ou identiques à ceux de la figure 1 portent le même chiffre de référence augmenté de 100.

Le WSS 110 reçoit le signal d'entrée sur son port commun et aiguille chaque canal de longueur d'onde vers le module d'extraction 108 si le canal doit être extrait et/ou vers la ligne 102 si le canal doit être transmis en aval. Le coupleur 107 remplit aussi deux fonctions : il combine les canaux en transit provenant du WSS 110 à travers la ligne 102 avec les canaux à insérer générés par le module d'insertion 103, et il diffuse tous ces canaux par ses deux branches de sortie vers la ligne 105 et la ligne 106, qui présentent un délai de transmission différent.

Le multiplexeur 104 réalise la fonction inverse du démultiplexeur 4 et peut être constitué du même composant monté de manière inversé. Ainsi, il transmet sur la ligne de sortie 109 les canaux de rang pair provenant de la ligne 105 et les canaux de rang impair provenant de la ligne 106.

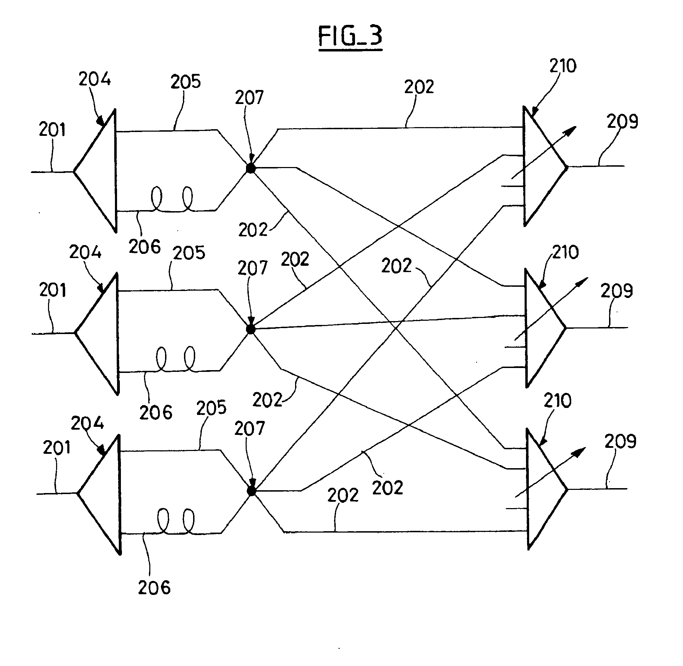

La figure 3 représente un OXC ayant une architecture de type « broadcast and select » avec des WSS 210 montés comme multiplexeurs programmables. Les éléments analogues ou identiques à ceux de la figure 1 portent le même chiffre de référence augmenté de 200. Un OXC ayant une connectivité d'ordre 3 a été représenté, c'est-à-dire avec trois lignes d'entrée 201 pour recevoir trois signaux optiques d'entrée et trois lignes de sortie 209 pour transmettre trois signaux optiques de sortie. Toutefois, l'architecture représentée peut être étendue à une connectivité quelconque, y compris une connectivité asymétrique avec des entrées et des sorties en nombres différents.

Dans ce mode de réalisation, chaque coupleur 207 est un coupleur de type 2:3 qui remplit deux fonctions : il recombine les canaux d'un signal d'entrée respectif provenant d'un démultiplexeur 204 à travers les deux lignes 205 et 206 ; et il diffuse tous ces canaux par ses branches de sortie vers chacun des WSS 210 à travers des lignes optiques 202. Un WSS 210 produit donc un signal de sortie respectif en sélectionnant des canaux de longueurs d'onde parmi tous les signaux qu'il reçoit sur ses entrées, c'est-à-dire qu'il peut notamment sélectionner des canaux provenant des trois signaux d'entrée.

Pour chaque entrée 201, le décalage temporel entre les lignes 205 et 206 est de préférence égal, pour favoriser l'équilibrage entre les entrées. Toutefois, ce décalage peut aussi être différent entre deux entrées 201.

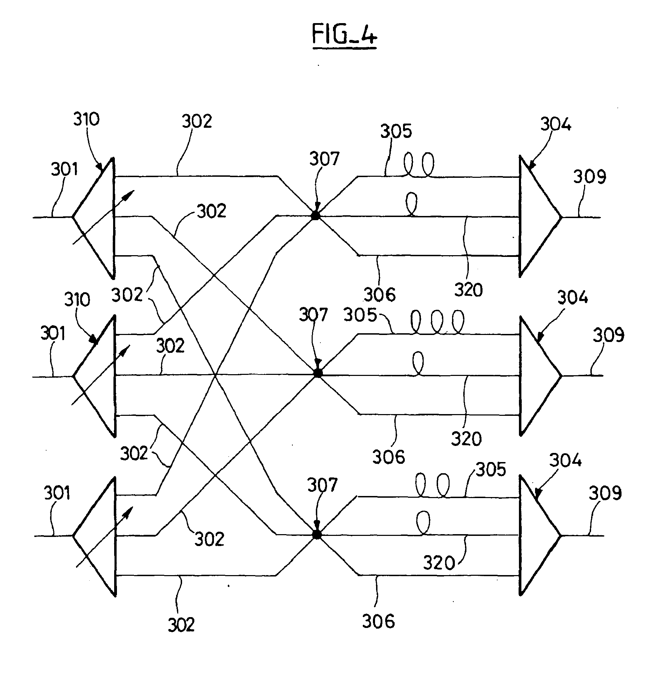

La figure 4 représente un OXC ayant une architecture de type « preselect and combine » avec des WSS 310 montés comme démultiplexeurs programmables. Les éléments analogues ou identiques à ceux de la figure 1 portent le même chiffre de référence augmenté de 300. Un OXC ayant une connectivité d'ordre 3 a été représenté, c'est-à-dire avec trois lignes d'entrée 301 pour recevoir trois signaux optiques d'entrée et trois lignes de sortie 309 pour transmettre trois signaux optiques de sortie. Toutefois, l'architecture représentée peut être étendue à une connectivité quelconque, y compris une connectivité asymétrique avec des entrées et des sorties en nombres différents.

Chaque WSS 310 est relié à une ligne d'entrée 301 pour recevoir un signal d'entrée correspondant sur son port commun. Il présente un port de sortie respectif associé à chaque ligne de sortie 309, par l'intermédiaire d'une ligne 302 et d'un coupleur 307 respectifs. Un WSS 310 peut donc sélectionner des canaux de longueurs d'onde du signal d'entrée pour chaque ligne de sortie respectivement.

Dans ce mode de réalisation, chaque coupleur 307 est un coupleur de type 3:3 qui remplit aussi deux fonctions : il combine les canaux transmis par les différents WSS 310 à travers les lignes 302 à destination d'une ligne de sortie donnée, et il diffuse tous ces canaux par ses branches de sortie vers les lignes 305, 306 et 320, qui présentent chacune un délai ou retard de transmission différent.

Chaque multiplexeur 304 est associé à une ligne de sortie 309 sur laquelle il transmet des canaux provenant de chacune des lignes 305, 306 et 320. Le multiplexeur 304 est ici conçu pour sélectionner les canaux de rang 0 modulo 3 sur la ligne 305, les canaux de rang 1 modulo 3 sur la ligne 320, et les canaux de rang 2 modulo 3 sur la ligne 306.

En variante, une sélection des canaux entre rangs pairs et impairs avec un multiplexeur à deux voies, comme sur la figure 2, est aussi réalisable dans le cas de la figure 4. Dans ce cas, des coupleurs 3:2 sont employés. De même, des démultiplexeurs à trois voies et trois retards différents peuvent être utilisés dans le cas de la figure 3, avec des coupleurs de type 3:3. De manière générale, les multiplexeurs ou démultiplexeurs employés divisent les canaux spectraux d'un même signal d'entrée (cas « broadcast and select ») ou d'un même signal de sortie (cas « preselect and combine ») en un certain nombre de groupes présentant chacun un retard distinct, à savoir 2 groupes sur les figures 1 à 3 et 3 groupes sur la figure 4. De préférence, ce nombre de groupes reste inférieur à ou voisin de la connectivité du noeud, de manière que le coupleur correspondant n'introduise pas des pertes trop élevées. Toutefois, ce nombre n'est pas limité dans l'absolu et pourrait aussi être supérieur à la connectivité du noeud. Par ailleurs des multiplexeurs ou démultiplexeurs produisant des groupes de canaux en nombres différents pourraient être prévus pour différentes entrées 201 ou différentes sorties 309 d'un même OXC. Toutefois, l'utilisation d'un multiplexeur ou démultiplexeur identique sur chaque entrée ou sortie favorise l'équilibrage entre les canaux.

Des multiplexeurs / démultiplexeurs présentant d'autres lois de combinaison / séparation des canaux peuvent aussi être utilisés. De préférence, les multiplexeurs / démultiplexeurs sont conçus de manière que deux canaux voisins dans la grille de longueurs d'onde soient dans deux groupes différents qui subissent des retards de propagation différents. En alternative, des retards de propagation différents peuvent être appliqués à des bandes de canaux à l'aide de multiplexeurs / démultiplexeurs par bande. Les multiplexeurs et démultiplexeurs peuvent être réalisés selon diverses techniques, voir par exemple « Interleaver Technology: comparisons and applications requirements », S.Cao et al., Journal of Lightwave Technology, vol. 22, pp281-289, janvier 2004.

En variante, des modules d'insertion et d'extraction peuvent aussi être prévus dans des OXC selon les figures 3 à 5. De tels modules peuvent alors être connectés de manière analogue au cas des ROADM des figures 1 et 2. Toutefois, il existe bien d'autres possibilités pour réaliser l'extraction, par exemple par le biais d'un coupleur connecté directement sur les fibres d'entrée 1, 101, 201 ou 301 du noeud ; et il existe bien d'autres possibilités pour réaliser l'insertion, par exemple par le biais d'un coupleur connecté directement sur les fibres de sortie 9, 109, 209 ou 309 du noeud.

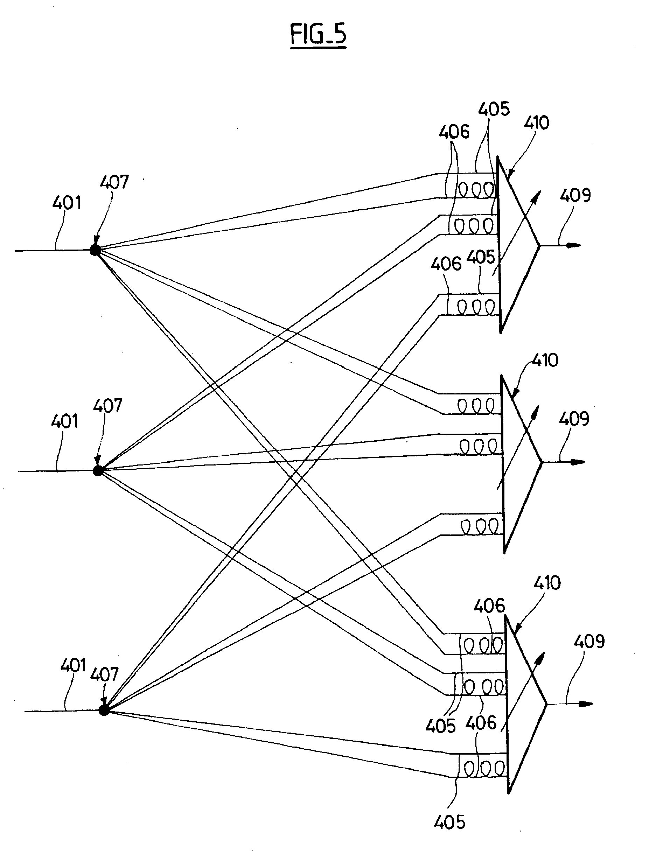

La figure 5 représente un OXC ayant une architecture de type « broadcast and select » avec des WSS 410 montés comme multiplexeurs programmables. Les éléments analogues à ceux de la figure 1 portent le même chiffre de référence augmenté de 400. Un OXC ayant une connectivité d'ordre 3 a été représenté, c'est-à-dire avec trois lignes d'entrée 401 pour recevoir trois signaux optiques d'entrée et trois lignes de sortie 409 pour transmettre trois signaux optiques de sortie. Toutefois, l'architecture représentée peut être étendue à une connectivité quelconque, y compris une connectivité asymétrique avec des entrée et des sortie en nombres différents.

L'architecture de la figure 5 présente des similitudes avec la figure 3, mais aussi des différences significatives et pénalisantes. Ici, le coupleur 407 est de type 1:6 et ne réalise qu'une seule fonction, à savoir distribuer le signal d'entrée reçu sur la ligne d'entrée 401 correspondante à chacun des WSS 410. Le coupleur 407 présente une connectivité deux fois plus grande que le noeud, afin de transmettre à chaque fois deux exemplaires du signal d'entrée sur deux ports d'entrées de chaque WSS, à travers deux lignes optiques 405 et 406 présentant des retards différents. Pour constituer le signal de sortie, un WSS 410 sélectionne des canaux de longueurs d'onde parmi tous les signaux qu'il reçoit sur ses entrées, c'est-à-dire qu'il peut notamment sélectionner des canaux provenant des trois signaux d'entrée. Toutefois, une contrainte supplémentaire doit être respecté dans ce cas, à savoir que les canaux de rang pair ne sont sélectionnés que sur les ports d'entrée associés aux lignes optiques 405 et les canaux de rang impair ne sont sélectionnés que sur les ports d'entrée associés aux lignes optiques 406. Ce faisant, pour produire la décorrélation temporelle des canaux voisins, cette architecture sollicite deux fois plus de ports d'entrée des WSS que l'architecture de la figure 3. Le coût d'un WSS augmente très sensiblement avec le nombre de ports. De plus, les WSS disponibles à l'heure actuelle ont un nombre de ports limité, de l'ordre de 10, ce qui limite l'applicabilité de cette architecture à des noeuds de faible connectivité. Enfin, du fait de la connectivité élevée du coupleur 407, celui-ci introduit des pertes importantes, par exemple de l'ordre de 3dB. Par contraste, l'architecture de la figure 3 présente des pertes d'insertion acceptables et ne nécessite pas plus de ports de WSS que les architectures d'OXC de l'art antérieur.

Un avantage particulier des architectures basées sur des WSS pour réaliser des ROADM et OXC est l'extensibilité de ces architectures. Par exemple, un ROADM tel que sur la figure 1 peut être assez facilement étendu en un OXC tel que sur la figure 3 par ajout des éléments nécessaires, sans modification substantielle des éléments déjà installés. Cette extensibilité peut être favorisé en prévoyant dès l'origine un nombre suffisant de ports sur le WSS et un nombre suffisant de branches sur le coupleur. De même, la connectivité d'un OXC de ce type peut être progressivement étendue. Ces remarques valent également pour les figures 2 et 4.

Alternativement, des noeuds de commutation similaires aux figures 1 à 5 peuvent aussi être réalisés avec d'autres types de modules de sélection de longueurs d'ondes reconfigurables, notamment des modules constitués d'éléments discrets tels que multiplexeurs, démultiplexeurs et matrices optiques de commutation, par exemple crossbar ou banyan. La fonction de ces modules de sélection reste de sélectionner des canaux devant être transmis vers une ou plusieurs sorties du noeud.

Par mesure de simplicité, seule la couche optique des noeuds de commutation a été représentée dans les modes de réalisation décrits ci-dessus. Bien d'autres éléments non représentés peuvent entrer dans la constitution d'un tel noeud de commutation, notamment un ou plusieurs modules de commande pour contrôler les WSS et les modules d'insertion et d'extraction. Ce contrôle doit notamment éviter les collisions entre canaux de longueurs d'ondes. Des modules de commande peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Par ailleurs, un tel noeud de commutation peut fonctionner en relation avec un système de gestion de réseau. Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

## Revendications

1. Dispositif de commutation optique pour un réseau optique transparent, ledit dispositif comportant :
une entrée (1, 201) pour recevoir un signal optique entrant à multiplexage de longueurs d'ondes,
une sortie (9, 209) pour transmettre un signal optique sortant à multiplexage de longueurs d'ondes,
un module de sélection de longueurs d'ondes reconfigurable (10, 210) agence poursélectionner en fonction d'un signal de commande des canaux de longueurs d'ondes dudit signal optique entrant à transmettre vers ladite sortie,
et un coupleur optique (7, 207) comprenant une pluralité de branches de sortie, une première (2, 202) desdites branches de sortie étant connectée à une entrée dudit module de sélection de longueurs d'ondes reconfigurable,
un démultiplexeur de longueurs d'ondes (4, 204) agencé pour faire passer séparément depuis ladite entrée du dispositif de commutation un premier canal de longueur d'onde dudit signal optique entrant vers une première sortie du démultiplexeur de longueurs d'ondes et un deuxième canal de longueur d'onde dudit signal optique entrant vers une deuxième sortie du démultiplexeur de longueurs d'ondes,
**caractérisé par le fait qu'**il comporte:
ledit coupleur optique comprenant une pluralité de branches d'entrée, une première desdites branches d'entrée étant connectée à ladite première sortie du démultiplexeur de longueurs d'ondes pour recevoir ledit premier canal de longueur d'onde à travers un premier lien optique (5, 205) présentant un premier retard, une deuxième desdites branches d'entrée étant connectée à ladite deuxième sortie du démultiplexeur de longueurs d'ondes pour recevoir ledit deuxième canal de longueur d'onde à travers un deuxième lien optique (6, 206) présentant un deuxième retard différent du premier retard.

2. Dispositif de commutation selon la revendication 1, **caractérisé par le fait que** le nombre de branches d'entrée du coupleur est inférieur ou égal au nombre de branches de sortie du coupleur.

3. Dispositif de commutation selon la revendication 1 ou 2, **caractérisé par le fait que** le démultiplexeur est apte à séparer des canaux de longueurs d'ondes appartenant à une grille prédéterminée de fréquences porteuses en une pluralité de groupes de canaux qui sont passés vers des sorties respectives, de manière que deux canaux ayant des fréquences adjacentes dans ladite grille sont à chaque fois passés vers deux sorties distinctes du démultiplexeur.

4. Dispositif de commutation selon l'une des revendications 1 à 3, **caractérisé par le fait qu'**une deuxième branche de sortie du coupleur est reliée à une entrée d'un deuxième module de sélection de longueurs d'ondes reconfigurable (210) agencé pour transmettre vers une deuxième sortie (209) du dispositif de commutation des canaux de longueurs d'ondes dudit signal optique entrant sélectionnés en fonction d'un signal de commande dudit deuxième module de sélection de longueurs d'ondes.

5. Dispositif de commutation selon la revendication 4, **caractérisé par le fait qu'**il comporte :
une deuxième entrée (201) pour recevoir un deuxième signal optique entrant à multiplexage de longueurs d'ondes,
un deuxième coupleur optique (207) comprenant une pluralité de branches d'entrée et une pluralité de branches de sortie,
et un deuxième démultiplexeur de longueurs d'ondes (204) agencé pour faire passer séparément depuis ladite deuxième entrée du dispositif de commutation un premier canal de longueur d'onde dudit deuxième signal optique entrant vers une première sortie du deuxième démultiplexeur de longueurs d'ondes et un deuxième canal de longueur d'onde dudit deuxième signal optique entrant vers une deuxième sortie du deuxième démultiplexeur de longueurs d'ondes,
les premier et deuxième modules de sélection de longueurs d'ondes reconfigurables (210) comportant chacun une deuxième entrée, une première (202) des branches de sortie du deuxième coupleur étant connectée à la deuxième entrée du premier module de sélection de longueurs d'ondes reconfigurable, une deuxième (202) des branches de sortie du deuxième coupleur étant connectée à la deuxième entrée du deuxième module de sélection de longueurs d'ondes reconfigurable, une première des branches d'entrée du deuxième coupleur étant connectée à ladite première sortie du deuxième démultiplexeur de longueurs d'ondes pour recevoir ledit premier canal de longueur d'onde à travers un troisième lien optique (205) présentant un troisième retard, une deuxième desdites branches d'entrée du deuxième coupleur étant connectée à ladite deuxième sortie du démultiplexeur de longueurs d'ondes pour recevoir ledit deuxième canal de longueur d'onde à travers un quatrième lien optique (206) présentant un quatrième retard différent du troisième retard.

6. Dispositif de commutation selon l'une des revendications 1 à 5, **caractérisé par le fait qu'**il comporte un module d'extraction (8) relié à une autre branche de sortie du coupleur pour démoduler des données numériques portées par au moins un canal de longueur d'onde du signal optique entrant.

7. Dispositif de commutation selon l'une des revendications 1 à 6, **caractérisé par le fait qu'**il comporte un module d'insertion (3) relié à une entrée du module de sélection de longueurs d'ondes reconfigurable pour insérer un signal optique modulé à partir de données numériques.

8. Dispositif de commutation optique pour un réseau optique transparent, ledit dispositif comportant :
une entrée (101, 301) pour recevoir un signal optique entrant à multiplexage de longueurs d'ondes,
une sortie (109, 309) pour transmettre un signal optique sortant à multiplexage de longueurs d'ondes,
un module de sélection de longueurs d'ondes reconfigurable (110, 310) agencé pour sélectionner en fonction d'un signal de commande des canaux de longueurs d'ondes dudit signal optique entrant à transmettre vers ladite sortie,
et un coupleur optique (107, 307) comprenant une pluralité de branches d'entrée, une première desdites branches d'entrée (102, 302) étant connectée à une sortie dudit module de sélection de longueurs d'ondes reconfigurable,
un multiplexeur de longueurs d'ondes (104, 304) agencé pour faire passer vers ladite sortie du dispositif de commutation un premier canal de longueur d'onde sélectivement depuis une première entrée dudit multiplexeur de longueurs d'ondes et un deuxième canal de longueur d'onde sélectivement depuis une deuxième entrée dudit multiplexeur de longueurs d'ondes,
**caracterisé par le fait qu**'il comporte:
ledit coupleur optique comprenant une pluralité de branches de sortie, une première desdites branches de sortie étant connectée à ladite première entrée du multiplexeur de longueurs d'ondes à travers un premier lien optique (105, 305) présentant un premier retard, une deuxième desdites branches de sortie étant connectée à ladite deuxième entrée du multiplexeur de longueurs d'ondes à travers un deuxième lien optique (106, 306) présentant un deuxième retard différent du premier retard.

9. Dispositif de commutation selon la revendication 8, **caractérisé par le fait que** le nombre de branches de sortie du coupleur est inférieur ou égal au nombre de branches d'entrée du coupleur.

10. Dispositif de commutation selon la revendication 8 ou 9, **caractérisé par le fait que** le multiplexeur est apte à faire passer des canaux de longueurs d'ondes appartenant à une grille prédéterminée de fréquences porteuses sous la forme d'une pluralité de groupes de canaux qui sont passés sélectivement depuis des entrées respectives, de manière que deux canaux ayant des fréquences adjacentes dans ladite grille sont à chaque fois passés depuis deux entrées distinctes du multiplexeur.

11. Dispositif de commutation selon l'une des revendications 8 à 10, **caractérisé par le fait qu'**il comporte un deuxième module de sélection de longueurs d'ondes reconfigurable (310) agencé pour transmettre depuis une deuxième entrée (301) du dispositif de commutation vers une deuxième branche d'entrée (302) du coupleur des canaux de longueurs d'ondes d'un deuxième signal optique entrant sélectionnés en fonction d'un signal de commande dudit deuxième module de sélection de longueurs d'ondes.

12. Dispositif de commutation selon la revendication 11, **caractérisé par le fait qu'**il comporte :
une deuxième sortie (309) pour transmettre un deuxième signal optique sortant à multiplexage de longueurs d'ondes,
un deuxième coupleur optique (307) comprenant une pluralité de branches d'entrée et une pluralité de branches de sortie,
et un deuxième multiplexeur de longueurs d'ondes (304) agencé pour faire passer vers ladite deuxième sortie du dispositif de commutation un premier canal de longueur d'onde sélectivement depuis une première entrée dudit deuxième multiplexeur de longueurs d'ondes et un deuxième canal de longueur d'onde sélectivement depuis une deuxième entrée dudit deuxième multiplexeur de longueurs d'ondes,
les premier et deuxième modules de sélection de longueurs d'ondes reconfigurables (310) comportant chacun une deuxième sortie, une première (302) des branches d'entrée du deuxième coupleur étant connectée à la deuxième sortie du premier module de sélection de longueurs d'ondes reconfigurable, une deuxième (302) des branches d'entrée du deuxième coupleur étant connectée à la deuxième sortie du deuxième module de sélection de longueurs d'ondes reconfigurable, une première des branches de sortie du deuxième coupleur étant connectée à ladite première entrée du deuxième multiplexeur de longueurs d'ondes à travers un troisième lien optique (305) présentant un troisième retard, une deuxième des branches de sortie du deuxième coupleur étant connectée à ladite deuxième entrée du deuxième multiplexeur de longueurs d'ondes à travers un quatrième lien optique (306) présentant un quatrième retard différent du troisième retard.

13. Dispositif de commutation selon l'une des revendications 8 à 12, **caractérisé par le fait qu'**il comporte un module d'extraction (108) relié à une autre sortie du module de sélection de longueurs d'ondes reconfigurable pour démoduler des données numériques portées par au moins un canal de longueur d'onde du signal optique entrant.

14. Dispositif de commutation selon l'une des revendications 8 à 13, **caractérisé par le fait qu'**il comporte un module d'insertion (13) relié à une deuxième branche d'entrée du coupleur pour insérer un signal optique modulé à partir de données numériques.

15. Dispositif de commutation selon l'une des revendications 1 à 14, **caractérisé par le fait que** la différence entre le premier retard et le deuxième retard est comprise entre T/10 et 1.5T, où désigne le temps bit du signal optique entrant.

## Claims

1. An optical switching device for a transparent optical network, said device comprising:
an input (1, 201) for receiving an incoming wavelength-division multiplexed optical signal,
an output (9, 209) for transmitting an outgoing wavelength-division multiplexed optical signal,
a reconfigurable wavelength-selection module (10, 210) configured to select, based on a control signal, wavelength channels from said incoming optical signal to be transmitted to said output,
and an optical coupler (7, 207) comprising a plurality of output branches, a first (2, 202) of said output branches being connected to an input of said reconfigurable wavelength-selection module,
a wavelength demultiplexer (4, 204) configured to separately route a first wavelength channel of said incoming optical signal from said input of the switching device to a first output of the wavelength-division demultiplexer, and a second wavelength channel of said incoming optical signal to a second output of the wavelength-division demultiplexer,
**characterized by** the fact that:
said optical coupler comprises a plurality of input branches, a first one of said input branches being connected to said first output of the wavelength-division demultiplexer in order to receive said first wavelength channel by way of a first optical link (5, 205) exhibiting a first delay, a second of said input branches being connected to said second output of the wavelength-division demultiplexer in order to receive said second wavelength channel by way of a second optical link (6, 206) exhibiting a second delay different from the first delay.

2. A switching device according to claim 1, **characterized by** the fact that the number of input branches that the coupler has is less than or equal to the number of output branches that the coupler has.

3. A switching device according to claim 1 or 2, **characterized by** the fact that the demultiplexer is capable of separating wavelength channels belonging to a predetermined grid of carrier frequencies into a plurality of groups of channels which are routed to respective outputs, in such a way that two channels having adjacent frequencies within said grid are routed to two distinct outputs of the demultiplexer each time.

4. A switching device according to one of the claims 1 to 3, **characterized by** the fact that a second output branch of the coupler is connected to an input of a second reconfigurable wavelength selection module (210) configured to transmit to a second output (209) wavelength channels from said incoming optical signal selected based on the control signal of said second wavelength-selection module.

5. A switching device according to claim 4, **characterized by** the fact that it comprises:
a second input (201) for receiving a second incoming wavelength-division multiplexed optical signal,
a second optical coupler (207) comprising a plurality of input branches and a plurality of output branches,
and a second wavelength-division demultiplexer (204) configured to separately route a first wavelength channel of said incoming optical signal from said second switching device input to a first output of the second wavelength-division demultiplexer, and a second wavelength channel of said second incoming optical signal to a second output of the second wavelength-division demultiplexer,
the first and second reconfigurable wavelength-selection modules (210) each comprising a second input, a first (202) of the output branches of this second coupler being connected to the second input of the first reconfigurable wavelength-selection module, a second (202) of the output branches of the second coupler being connected to the second input of the second reconfigurable wavelength-selection module, a first of the input branches of the second coupler being connected to said first output of the second wavelength-division demultiplexer in order to receive said first wavelength channel through a third optical link (205) exhibiting a third delay, a second of said input branches of the second coupler being connected to said second output of the wavelength-division demultiplexer in order to receive said second wavelength channel through a fourth optical link (206) exhibiting a fourth delay different from the third delay.

6. A switching device according to one of the claims 1 to 5, **characterized by** the fact that it comprises an extraction module (8) connected to another output branch of the coupler in order to demodulate digital data carried by at least one wavelength channel of the incoming optical signal.

7. A switching device according to one of the claims 1 to 6, **characterized by** the fact that it comprises an insertion module (3) connected to an input of the reconfigurable wavelength-selection module in order to insert an optical signal modulated based on numeric data.

8. An optical switching device for a transparent optical network, said device comprising:
an input (101, 301) for receiving an incoming wavelength-division multiplexed optical signal,
an output (109, 309) for transmitting an outgoing wavelength-division multiplexed optical signal,
a reconfigurable wavelength-selection module (110, 310) configured to select, based on a control signal, wavelength channels from said incoming optical signal to be transmitted to said output,
and an optical coupler (107, 307) comprising a plurality of input branches, a first of said input branches (102, 302) being connected to an output of said reconfigurable wavelength-selection module,
a wavelength division multiplexer (104, 304) configured to route to said output of the switching device a first wavelength channel selectively from a first input of said wavelength division multiplexer and a second wavelength channel selectively from a second input of said wavelength-division multiplexer.
**characterized by** the fact that, said optical coupler comprises a plurality of output branches, a first of said output branches being connected to said first input of the wavelength-division multiplexer through a first optical link (105, 305) exhibiting a first delay, a second of said output branches being connected to said second input of the wavelength-division multiplexer through a second optical link (106, 306) exhibiting a second delay different from the first delay.

9. A switching device according to claim 8, **characterized by** the fact that the number of output branches that the coupler has is less than or equal to the number of input branches that the coupler has.

10. A switching device according to claim 8 or 9, **characterized by** the fact that the multiplexer is capable of routing wavelength channels belonging to a predetermined grid of carrier frequencies in the form of a plurality of groups of channels which are selectively routed from respective inputs, so that two channels having adjacent frequencies within said grid are routed to two distinct outputs of the demultiplexer each time.

11. A switching device according to one of the claims 8 to 10, **characterized by** the fact that it comprises a second reconfigurable wavelength-selection module (310) configured to transmit, from a second input (301) of the switching device to a second input branch (302) of the coupler, wavelength channels of a second incoming optical signal selected based on a control signal of said second wavelength-selection module.

12. A switching device according to claim 11, **characterized by** the fact that it comprises:
a second output (309) for transmitting a second outgoing wavelength-multiplexed optical signal,
a second optical coupler (307) comprising a plurality of input branches and a plurality of output branches,
and a second wavelength division multiplexer (304) configured to route to said second output of the switching device, a first wavelength channel selectively from a first input of said second wavelength-division multiplexer and a second wavelength channel selectively from a second input of said wavelength-division multiplexer,
the first and second reconfigurable wavelength-selection modules (310) each comprising a second output, a first (302) of the input branches of the second coupler being connected to the second output of the first reconfigurable wavelength-selection module, a second (302) of the input branches of the second coupler being connected to the second output of the second reconfigurable wavelength-selection module, a first of the output branches of the second coupler being connected to said first input of the second wavelength-division multiplexer through a third optical link (305) exhibiting a third delay, a second of the output branches of the second coupler being connected to said second input of this second wavelength-division multiplexer through a fourth optical link (306) exhibiting a fourth delay different from the third delay.

13. A switching device according to one of the claims 8 to 12, **characterized by** the fact that it comprises an extraction module (108) connected to another output of the reconfigurable wavelength-selection module in order to demodulate numeric data carried by at least one wavelength channel of the incoming optical signal.

14. A switching device according to one of the claims 8 to 13, **characterized by** the fact that it comprises an insertion module (13) connected to a second input branch of the coupler in order to insert an optical signal modulated based on numeric data.

15. A switching device according to one of the claims 1 to 14, **characterized by** the fact that the difference between the first delay and the second delay falls between T/10 and 1.5T, where T refers to the bit time of the incoming optical signal.

## Patentansprüche

1. Optische Schaltvorrichtung für ein transparentes optisches Netzwerk, wobei die besagte Vorrichtung umfasst:
Einen Eingang (1, 201) für den Empfang eines eingehenden optischen Signals mit Wellenlängenmultiplex,
einen Ausgang (9, 209) für die Übertragung eines ausgehenden optischen Signals mit Wellenlängenmultiplex,
ein rekonfigurierbares Wellenlängenauswahlmodul (10, 210), welches dazu ausgelegt ist, gemäß einem Steuersignal Wellenlängenkanäle des besagten eingehenden optischen Signals, welches an den besagten Ausgang weitergeleitet werden soll, auszuwählen,
einen optischen Koppler (7, 207) mit einer Mehrzahl von Ausgangszweigen, wobei ein erster (2, 202) der besagten Ausgangszweige an einen Eingang des besagten rekonfigurierbaren Wellenlängenauswahlmoduls angeschlossen ist,
einen Wellenlängendemultiplexer (4, 204), welcher dazu ausgelegt ist, separat einen ersten Wellenlängenkanal des besagten eingehenden optischen Signals von dem besagten Eingang der Schaltvorrichtung an einen ersten Ausgang des Wellenlängendemultiplexers und einen zweiten Wellenlängenkanal des besagten eingehenden optischen Signals an einen zweiten Ausgang des Wellenlängendemultiplexers zu leiten,
**dadurch gekennzeichnet, dass**
der besagte optische Koppler eine Mehrzahl von Eingangszweigen umfasst, wobei ein erster der besagten Eingangszweige an den besagten ersten Ausgang des Wellenlängendemultiplexers angeschlossen ist, um den besagten ersten Wellenlängenkanal über eine erste optische Verbindung (5, 205), welche eine erste Verzögerung aufweist, zu empfangen, wobei ein zweiter der besagten Eingangszweige an den besagten zweiten Ausgang des Wellenlängendemultiplexers angeschlossen ist, um den besagten zweiten Wellenlängenkanal über eine zweite optische Verbindung (6, 206), welche eine zweite sich von der ersten Verzögerung unterscheidende Verzögerung aufweist, zu empfangen.

2. Schaltvorrichtung nach Anspruch 1, **dadurch gekennzeichnet, dass** die Anzahl der Eingangszweige des Kopplers kleiner als die oder gleich der Anzahl der Ausgangszweige des Kopplers ist.

3. Schaltvorrichtung nach Anspruch 1 oder 2, **dadurch gekennzeichnet, dass** der Demultiplexer fähig ist, Wellenlängenkanäle, welche einem vorgegebenen Trägerfrequenzraster angehören, in eine Mehrzahl von Kanalgruppen, welche an entsprechende Ausgänge geleitet werden, zu trennen, so dass zwei Kanäle mit benachbarten Frequenzen in dem besagten Raster jedes Mal an zwei verschiedene Ausgänge des Demultiplexers geleitet werden.

4. Schaltvorrichtung nach einem der Ansprüche 1 bis 3, **dadurch gekennzeichnet, dass** ein zweiter Ausgangszweig des Kopplers an einen Eingang eines zweiten konfigurierbaren Wellenlängenauswahlmoduls (210), welches dazu ausgelegt ist, gemäß einem Steuersignal des besagten zweiten Wellenlängenauswahlmoduls ausgewählte Wellenlängenkanäle des besagten eingehenden optischen Signals an einen zweiten Ausgang (209) der Schaltvorrichtung zu übertragen, angeschlossen ist.

5. Schaltvorrichtung nach Anspruch 4, **dadurch gekennzeichnet, dass** sie umfasst:
Einen zweiten Eingang (201) für den Empfang eines zweiten eingehenden optischen Signals mit Wellenlängenmultiplexing,
einen zweiten optischen Koppler (207) mit einer Mehrzahl von Eingangszweigen und einer Mehrzahl von Ausgangszweigen,
und einen zweiten Wellenlängendemultiplexer (204), welcher dazu ausgelegt ist, separat einen ersten Wellenlängenkanal des besagten zweiten eingehenden optischen Signals von dem besagten zweiten Eingang der Schaltvorrichtung an einen ersten Ausgang des Wellenlängendemultiplexers und einen zweiten Wellenlängenkanal des besagten eingehenden zweiten optischen Signals an einen zweiten Ausgang des Wellenlängendemultiplexers zu leiten,
wobei das erste und das zweite rekonfigurierbare Wellenlängenauswahlmodul (210) jeweils einen zweiten Eingang umfassen, wobei ein erster (202) der Ausgangszweige des zweiten Kopplers an den zweiten Eingang des ersten rekonfigurierbaren Wellenlängenauswahlmoduls angeschlossen ist, wobei ein zweiter (202) der Ausgangszweige des zweiten Kopplers an den zweiten Eingang des zweiten rekonfigurierbaren Wellenlängenauswahlmoduls angeschlossen ist, wobei ein erster der Eingangszweige des zweiten Kopplers an den besagten ersten Ausgang des zweiten Wellenlängenmultiplexers angeschlossen ist, um den besagten ersten Wellenlängenkanal über eine dritte optische Verbindung (205), welche eine dritte Verzögerung aufweist, zu empfangen, wobei ein zweiter der besagten Eingangszweige des zweiten Kopplers an den besagten zweiten Ausgang des Wellenlängendemultiplexers angeschlossen ist, um den besagten zweiten Wellenlängenkanal über eine vierte optische Verbindung (206), welche eine vierte, sich von der dritten Verzögerung unterscheidende Verzögerung aufweist, zu empfangen.

6. Schaltvorrichtung nach einem der Ansprüche 1 bis 5, **dadurch gekennzeichnet, dass** sie ein Extraktionsmodul (8) umfasst, welches an einen anderen Ausgangszweig des Kopplers angeschlossen ist, um die von mindestens einem Wellenlängenkanal des eingehenden optischen Signals getragenen digitalen Daten zu demodulieren.

7. Schaltvorrichtung nach einem der Ansprüche 1 bis 6, **dadurch gekennzeichnet, dass** sie ein Insertionsmodul (3) umfasst, welches an einen Eingang des rekonfigurierbaren Wellenlängenauswahlmoduls angeschlossen ist, um ein aus den digitalen Daten moduliertes optisches Signal einzufügen.

8. Optische Schaltvorrichtung für ein transparentes optisches Netzwerk, wobei die Vorrichtung umfasst :
Einen Eingang (101, 301) für den Empfang eines eingehenden optischen Signals mit Wellenlängenmultiplex,
einen Ausgang (109, 309) für die Übertragung eines ausgehenden optischen Signals mit Wellenlängenmultiplex,
ein rekonfigurierbares Wellenlängenauswahlmodul (110, 310), welches dazu ausgelegt ist, gemäß einem Steuersignal Wellenlängenkanäle des besagten eingehenden optischen Signals, welches an den besagten Ausgang weitergeleitet werden soll, auszuwählen,
einen optischen Koppler (107, 307) mit einer Mehrzahl von Eingangszweigen, wobei ein erster der besagten Eingangszweige (102, 302) an einen Ausgang des besagten rekonfigurierbaren Wellenlängenauswahlmoduls angeschlossen ist,
einen Wellenlängenmultiplexer (104, 304), welcher dazu ausgelegt ist, einen ersten Wellenlängenkanal selektiv von einem ersten Eingang des besagten Wellenlängenmultiplexers und einen zweiten Wellenlängenkanal selektiv von einem zweiten Eingang des besagten Wellenlängenmultiplexers an den besagten Ausgang der Schaltvorrichtung zu leiten,
**dadurch gekennzeichnet, dass**
der besagte optische Koppler eine Mehrzahl von Ausgangszweigen umfasst, wobei ein erster der besagten Ausgangszweige über eine erste optische Verbindung (105, 305), welche eine erste Verzögerung aufweist, an den besagten ersten Eingang des Wellenlängendemultiplexers angeschlossen ist, wobei ein zweiter der besagten Ausgangszweige über eine zweite optische Verbindung (106, 306), welche eine zweite sich von der ersten Verzögerung unterscheidende Verzögerung aufweist, an den besagten zweiten Eingang des Wellenlängenmultiplexers angeschlossen ist.

9. Schaltvorrichtung nach Anspruch 8, **dadurch gekennzeichnet, dass** die Anzahl der Ausgangszweige des Kopplers niedriger als die oder gleich der Anzahl der Eingangszweige des Kopplers ist.

10. Schaltvorrichtung nach Anspruch 8 oder 9, **dadurch gekennzeichnet, dass** der Multiplexer fähig ist, Wellenlängenkanäle, welche einem vorgegebenen Trägerfrequenzraster angehören, in der Form einer Mehrzahl von Kanalgruppen, welche selektiv ausgehend von den jeweiligen Eingängen geleitet werden, zu leiten, so dass zwei Kanäle mit benachbarten Frequenzen in dem besagten Raster jedes Mal ausgehend von zwei verschiedenen Eingängen des Multiplexers geleitet werden.

11. Schaltvorrichtung nach einem der Ansprüche 8 bis 10, dass sie ein zweites rekonfigurierbares Wellenlängenauswahlmodul (310) umfasst, welches dazu ausgelegt ist, Wellenlängenkanäle eines zweiten eingehenden optischen Signals, welche gemäß einem Steuersignal des besagten zweiten Wellenlängenauswahlmoduls ausgewählt werden, von einem zweiten Eingang (301) der Schaltvorrichtung an einen zweiten Eingangszweig (302) des Kopplers zu übertragen.

12. Schaltvorrichtung nach Anspruch 11, **dadurch gekennzeichnet, dass** sie umfasst:
einen zweiten Ausgang (309) zum Übertragen eines zweiten ausgehenden optischen Signals mit Wellenlängenmultiplex,
einen zweiten optischen Koppler (307) mit einer Mehrzahl von Eingangszweigen und einer Mehrzahl von Ausgangszweigen,
und einen zweiten Wellenlängenmultiplexer (304), welcher dafür ausgelegt ist, einen ersten Wellenlängenkanal selektiv von einem ersten Eingang des besagten zweiten Wellenlängenmultiplexers und einen zweiten Wellenlängenkanal selektiv von einem zweiten Eingang des besagten zweiten Wellenlängenmultiplexers an den besagten zweiten Ausgang der Schaltvorrichtung zu leiten,
wobei das erste und das zweite rekonfigurierbare Wellenlängenauswahlmodul (310) jeweils einen zweiten Ausgang umfassen, wobei ein erster (302) der Eingangszweige des zweiten Kopplers an den zweiten Ausgang des ersten rekonfigurierbaren Wellenlängenauswahlmoduls angeschlossen ist, wobei ein zweiter (302) der Eingangszweige des zweiten Kopplers an den zweiten Ausgang des zweiten rekonfigurierbaren Wellenlängenauswahlmoduls angeschlossen ist, wobei ein erster der Ausgangszweige des zweiten Kopplers über eine dritte optische Verbindung (305), welche eine dritte Verzögerung aufweist, an den besagten ersten Eingang des zweiten Wellenlängenmultiplexers angeschlossen ist, wobei ein zweiter der Ausgangszweige des zweiten Kopplers über eine vierte optische Verbindung (306), welche eine sich von der dritten Verzögerung unterscheidende vierte Verzögerung aufweist, an den besagten zweiten Eingang des zweiten Wellenlängenmultiplexers angeschlossen ist.

13. Schaltvorrichtung nach einem der Ansprüche 8 bis 12, **dadurch gekennzeichnet, dass** sie ein Extraktionsmodul (108) umfasst, welches an einen anderen Ausgang des rekonfigurierbaren Wellenlängenauswahlmoduls angeschlossen ist, um die von mindestens einem Wellenlängenkanal des eingehenden optischen Signals getragenen digitalen Daten zu demodulieren.

14. Schaltvorrichtung nach einem der Ansprüche 8 bis 13, **dadurch gekennzeichnet, dass** sie ein Insertionsmodul (13) umfasst, welches an einen zweiten Eingangszweig des Kopplers angeschlossen ist, um ein aus digitalen Daten moduliertes optisches Signal einzufügen.

15. Schaltvorrichtung nach einem der Ansprüche 1 bis 14, **dadurch gekennzeichnet, dass** die Differenz zwischen der ersten Verzögerung und der zweiten Verzögerung zwischen T/10 und 1,5T liegt, wobei T die Bitzeit des eingehenden optischen Signals bezeichnet.
